# EUROPEAN PATENT SPECIFICATION

(11) **EP 4 563 326 B1**
(45) Date of publication and mention of the grant of the patent: **04.11.2026**
(21) Application number: 23307077.0
(22) Date of filing: 28.11.2023
(51) Int. Cl.: B29C 64/245, B29C 64/232, B33Y 30/00

(54) **ADDITIVE MANUFACTURING SYSTEM AND METHOD FOR ADDITIVELY MANUFACTURING AN OBJECT**
SYSTEM ZUR GENERATIVEN FERTIGUNG UND VERFAHREN ZUR GENERATIVEN FERTIGUNG EINES OBJEKTS
SYSTÈME DE FABRICATION ADDITIVE ET PROCÉDÉ DE FABRICATION ADDITIVE D'UN OBJET

(43) Date of publication of application: 04.06.2025
(73) Proprietor: Essilor International, 94220 Charenton-Le-Pont (FR)
(72) Inventor: PADIOU, Jean-Marc, 94500 Champigny sur Marne (FR); LEITE, Pierre, 91650 Breuillet (FR); CASTRO MARTINEZ, Luis Ricardo, 94100 Saint-Maur-des-Fosses (FR); MARCHAL, Jeanne, 75011 Paris (FR)
(74) Representative: Korakis-Ménager, Sophie

(56) References cited:
- JP-A- 2016 150 466
- US-A1- 2017 100 903
- US-A1- 2022 402 208
- US-B2- 11 485 091

## Description

### Technical field

This disclosure relates to additive manufacturing system and method for additively manufacturing an object.

### Background information and prior art

Additive manufacturing is a technique for fabricating different types of objects. In embodiments, these objects may be parts of eyeglasses, for example, lenses.

During additive manufacturing, an object is fabricated from a material that will be deposited to create layers of the object. In other words, the object is manufactured in a layer-by-layer manner.

In embodiments a base portion of the object, as it is oriented for fabrication, may have a footprint which is in contact with a build platform of the additive manufacturing system. In embodiments, especially when complex objects, for example objects having a cantilevered part, are additively manufactured, pillars supporting the cantilevered part may be created. Once the object is additively manufactured these pillars are removed.

The creation of these pillars and their removal increase the complexity of the manufacturing, the quantity of materials used and therefore the cost of the manufacturing.

There is a need for an additive manufacturing system and an associated method for additively manufacturing an object, allowing the manufacturing of objects and not having the drawbacks presented previously.

Document US 11,485,091 B2 discloses methods and systems for additively manufacturing an object having an overhang feature. The system includes an array of platform segments forming a deposition surface. The system includes a plurality of elongated beams each connected to a platform segment. The system includes a moving platform configured to attach to a portion of the plurality of elongated beams and elevate the attached elongated beams.

### Summary

The following presents a simplified summary to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is an additive manufacturing system according to claim 1.

Another aspect of this disclosure is a method for additively manufacturing an object, according to claim 12.

**A** computer may include a memory and a processor. Examples of processors include microprocessors, microcontrollers, graphics processing units (GPUs), central processing units (CPUs), application processors, digital signal processors (DSPs), reduced instruction set computing (RISC) processors, systems on a chip (SoC), field-programmable gate arrays (FPGAs), programmable logic devices (PLDs), state machines, gated logic, discrete hardware circuits, and other suitable hardware configured to perform the various functionality described throughout this disclosure. The memory may be a computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the computer.

Another aspect of this disclosure is a non-transitory program storage device, readable by a computer, tangibly embodying a program of instructions executable by the computer to perform a method for additively manufacturing an object. The method comprises creating a first layer of a solid material, the first layer is part of the object. The method also comprises adjusting a position of at least one point of a surface of a build platform independently of other points of the surface. The build platform is configured to support the object during the manufacturing of the object. The method also comprises creating a second layer of the solid material, the second layer being part of the object. The surface of the build platform is impermeable.

Another aspect of this disclosure is a non-transitory program storage device, readable by a computer, tangibly embodying a program of instructions executable by the computer to perform a method for additively manufacturing an object. The method comprises creating successive layers of the object, modifying a shape of an impermeable surface of a build platform intended to support the object, so that a part of the surface of the build platform is adapted to support a part of a layer of the object yet to be manufactured and which is not resting on a previously manufactured layer of the object.

### Description of the drawings

For a more complete understanding of the description provided herein and the advantages thereof, reference is now made to the brief descriptions below, taken in connection with the accompanying drawings and detailed description, wherein like reference numerals represent like parts.
Figure 1 represents an additive manufacturing system.
Figures 2-a to 2-c represent at different times an embodiment of the build platform.
Figures 3-a to 3-c represent at different times another embodiment of the build platform, not according to the claimed invention.
Figure 4 represents the coffee ring effect.
Figure 5 represents the elements used for the determination of the local surface power *P*.
Figure 6 represents the parameters related to the description of a sine function of the local waviness of the layer.
Figures 7-a to 7-c represent different shapes of the base of the prism forming the blocks.
Figure 8 represents the method for additively manufacturing the object.
Figure 9 represents a use case, not according to the claimed invention, of the method, of figure 6, for additively manufacturing the object.

### Detailed description of embodiments

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form to avoid obscuring such concepts.

### Description of the additive manufacturing system

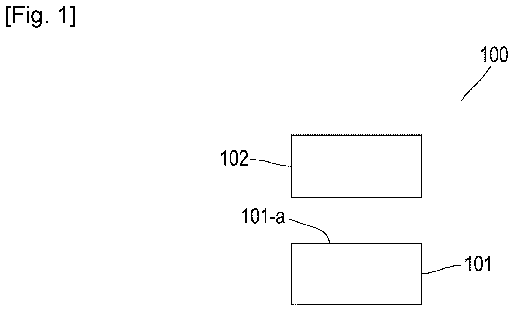

The figure 1 represents an additive manufacturing system 100. The additive manufacturing system 100 comprises:
- a build platform 101, a surface 101-a of the build platform 101 is configured to support an object being manufactured,
- a manufacturing module 102, that is configured to create layers of the object.
The surface 101-a of the build platform 102 is impermeable.
The additive manufacturing system 100 is configured to move a point of the surface 101-a of the build platform 101 independently of other points of the surface 101-a during the manufacturing of the object.

By additive manufacturing system one means a manufacturing system as defined in the international standard ASTM 2792-12, which mentions a process of joining materials to make objects from 3D model data, usually layer upon layer, as opposed to subtractive manufacturing methodologies, such as traditional machining.

A plurality of additive manufacturing methods exists among them one may find stereolithography, mask stereolithography or mask projection stereolithography, polymer jetting, Scanning Laser Sintering (SLS), Scanning Laser Melting (SLM), Fused Deposition Modeling (FDM).

The additive manufacturing system may also comprise a control module for controlling the movements of the points of surface 101-a and for controlling the manufacturing module 102. The aim of these controls may be to create layers of the object.

The control module may comprise a memory and a processor.

The control module may be a low resource calculation module.

Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field-programmable gate arrays (FPGAs), programmable logic devices (PLDs), state machines, gated logic, discrete hardware circuits, and other suitable hardware configured to perform the various functionality described throughout this disclosure.

The memory may be computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by the processor of the control module.

In embodiments, the surface 101-a of the build platform 101 on which the object is created is a top surface of the build platform 101. In embodiments the build platform 101 moves along a vertical axis (downward, where the object is fabricated beginning with the bottom layer, upward where the object is fabricated beginning by the top layer) by the thickness of a layer after each layer is fabricated.

In embodiments, the different layers may be realized by polymerization of a liquid. This polymerization may be realized for example using UV light or heat.

The manufacturing module 102 may be configured to dispense a liquid material and to solidify the liquid material to form the layers of the object. The manufacturing module 102 may comprise a jetting head configured to dispense the liquid material.

In embodiments, the liquid material may be a UV-curable liquid material. The manufacturing module 102 may comprise a UV light configured to cure the UV-curable liquid material. In other words, in these embodiments a layer of the liquid may be jetted on the build platform 101 and then the liquid may be polymerized to create a layer of the object. Once this layer is created, a further layer of liquid is jetted on the previously created layer and polymerized to create a further layer of the object. These embodiments are also known as polymer jetting.

In embodiments, this liquid may be contained in a tank. A bottom of the tank forms the build platform 101. Some parts of the top layer of the liquid are polymerized to form a layer of the object. Once a layer has been created the bottom of the tank, forming the build platform 102, is moved downward to allow a layer of liquid to cover the top of the object. Then a further layer of the object is created by polymerising a further layer of the liquid. In other words, the manufacturing module 102 may be configured to solidify parts of the upper layer of the liquid material, to form the layers of the object. The liquid material may be a curable material, for example a UV-curable material, and the manufacturing module 102 may comprise a UV light configured to cure the UV-curable material.

The manufacturing module 102 may comprise other types of curing units and dispensing units, for example:
- Use of a material dispenser and a LED bar or a DLP projector: in that case, the curing selectivity is done by the image projection (LED bar or DLP).
- Use a printhead to jet the liquid material and LED bar or DLP for curing the liquid material.
- If thick layers are realized, use of a dispenser such as syringes and LED bar or DLP for curing the liquid material. By thick layers one means layers thicker than 100µm.

As explained previously, the additive manufacturing system 100 is configured to move a point of the surface 101-a of the build platform 101 independently of other points of the surface 101-a during the manufacturing of the object.

The object may be manufactured layer by layer, and the additive manufacturing system is configured to move the point of the surface of the build platform between the manufacturing of two successive layers.

The additive manufacturing system 100 may be configured to move the point of the surface 101-a of the build platform 101 such that a distance between the manufacturing module 102 and a surface where the layer is created remains constant. This is particularly useful when used in polymer jetting, the droplets jetted by the manufacturing module 102 may be rather close to the part being built as the firing distance is typically in the mm range (around 1 mm for the print head reference KM1024iSHE manufactured by Konica Minolta). By firing distance, one means the distance between the print head and the surface where the liquid material is deposited. This surface is usually the surface of the build platform or the previous layer. That means that the build platform 101 should be able to adapt its form during the printing process in order to be versatile enough to produce the entire product range.

By remains constant one means that the distance is within a range close to a predetermined distance. The variation gap must permit the drop formation and avoid undesirable satellites. By satellites one means droplets that are detached from a main droplet of liquid material because of their small size and the force of the air that drifts them away from the jetting axis.

Using the additive manufacturing system 101 one may manufacture transparent objects, for example parts of eyeglasses or ophthalmic lenses. Sometimes the object may comprise cantilevered parts. By moving specific points of the surface 101-a, the additive manufacturing system 101 may create supports for these cantilevered parts. For example, one may use this to support a part of a curvature of the concave or convex side of a lens during the manufacturing of the lens.

An object for example an ophthalmic lens may be considered as transparent when the observation of an image through this object is perceived without significant loss of contrast. Stated otherwise, the inter-position of a transparent object between an image and an observer of the latter does not significantly reduce the quality of the image.

Using the additive manufacturing system 100 one may avoid having to create pillars that are sacrificial material. This reduces the complexity of the printing, avoids having to remove this sacrificial material and limits the amount of material necessary to manufacture the object.

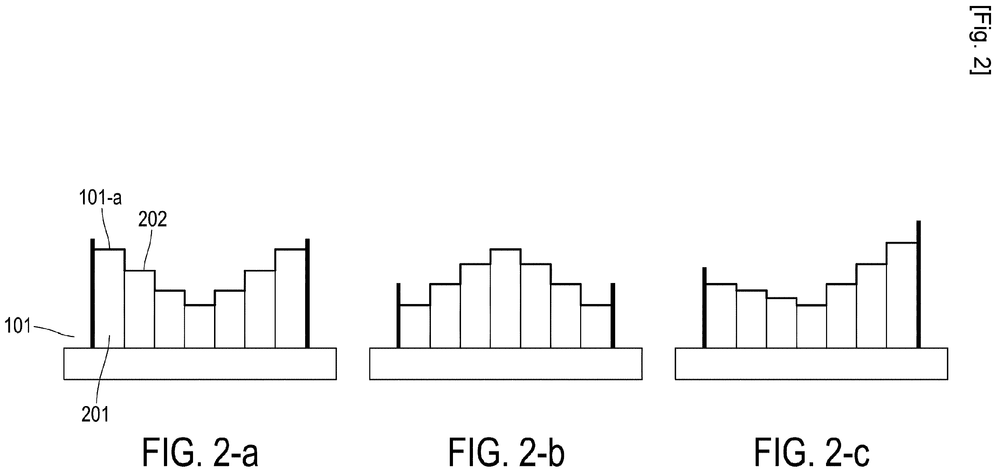

According to the invention and as presented in figures 2-a to 2-c, the build platform 101 is segmented into a plurality of blocks 201. A seal 202 is positioned at the junctions between the blocks 201. At least one of the blocks 201 is configured to move independently of the other blocks 201. The different blocks 201 may form actuators. The blocks 201 may be configured to move one end with respect to the other end.

The blocks 201 or the actuators may be moved using motors and screws, piezo actuators, fluid pressure.

The figures 2-a to 2-c represent each the same embodiment of the build platform 101 at different time. The blocks 201 are placed differently in each of the figures to adapt to the object to manufacture or different layers of the same object to manufacture.

The points moving during the manufacturing of the object may be located on a surface of one of the blocks 201.

The variable geometry of the surface 101-a of the build platform 101 is obtained by the different blocks 201 that can change their relative position to obtain a geometry of the surface 101-a that is compatible with the layer to manufacture.

The seals 202 positioned at the junctions between the blocks 201 contain the liquid state material during the manufacturing process. By contain, one means that the seals 202 avoid the liquid state material to leak between the blocks 201. The seals avoid the liquid material from penetrating between the blocks 201. These seals may be obtained by mechanical construction of the blocks 201 by very strict adjustment between the blocks 201 or by a supplementary element like films or sprays. In embodiments an outside limit of the build platform 101 may also comprise an external seal. The aim of this external seal is to avoid a leakage of the liquid material outside of the bluid platform 101.

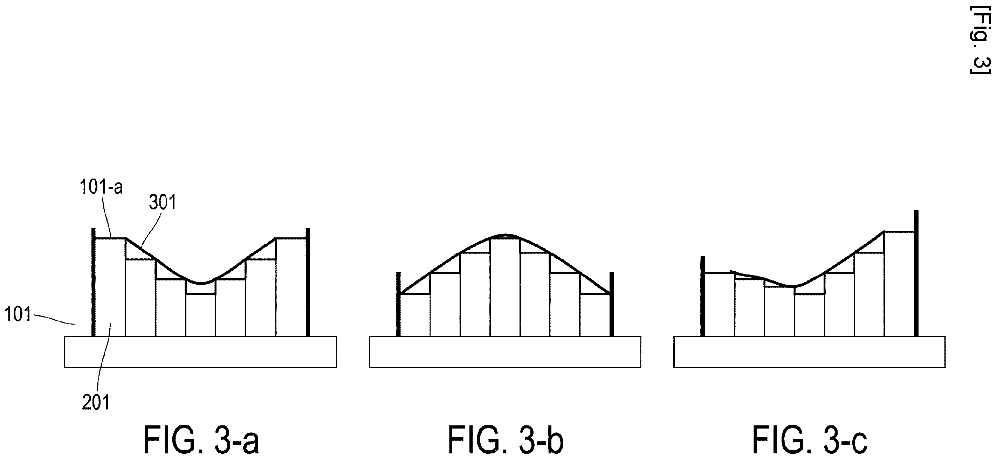

The figure 3-a to 3-c represent each the same embodiment of the build platform 101, not according to the claimed invention, at different times. The blocks 201 are placed differently in each of the figures to adapt to the object to manufacture or different layers of the same object to manufacture. In these embodiments the seal 202 is replaced by a layer 301 of elastic and non-porous material. The layer 301 may be, for example, formed of elastomer of silicone, polyurethane, neoprene, PDMS (Polydimethylsiloxane). As previously the different blocks 201 form the actuators. One end of each of the blocks 201 may be attached to the layer 301 and the other to a fix support, common to all the blocks 201. In other words, in these embodiments, the surface 101-a of the build platform 101, and the build platform 101 includes actuators, an end of the actuators is configured to move the point of the surface 101-a independently of the other points of the surface.

The embodiment of figures 3-a to 3-c avoid the stairs on the manufactured object caused by the junctions between the blocks 201. These stairs are generated by the difference of height between two adjacent blocks. The stairs create a discontinuity at the surface of the manufactured object. When using the layer 301 the difference of height between two adjacent blocks disappears and thus the stairs on the manufactured object. In other words the layer 301 has the further advantage of limiting the need of polishing of the manufactured object after the manufacturing step.

Furthermore, the embodiment of figures 3-a to 3-c allows any shape of the blocks, for example cylinders. Indeed, in this embodiment, not according to the claimed invention, the impermeability is obtained by the layer 301 and not by the seals 202.

In embodiments the layer 301 of elastic and non-porous material may be chemically compatible with the liquid material used to manufacture the object. Furthermore, the material of the layer 301 may be chosen to allow an easy separation of the object from the layer 301. By ease separation one means without damage to the layer 301 or the object.

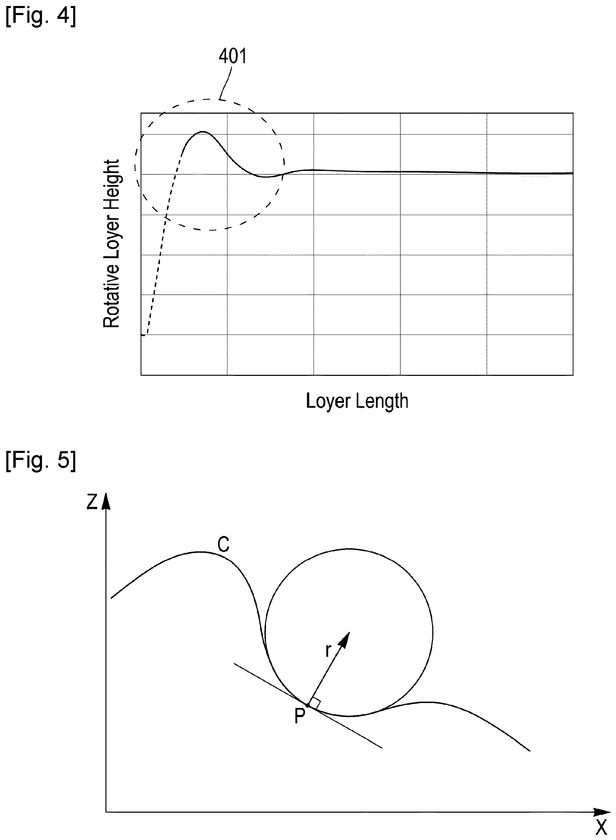

The wettability between the layer 301 and the liquid material is also an important criterion for polymer jetting technology where the printed drops must collapse to avoid material inhomogeneity. It shall be appreciated that the membrane does not amplify the "Coffee ring" effect. The figure 4 represents the 'coffee ring' effect, as shown within circle 401. The "Coffee ring" effect is a spontaneous phenomenon impacting a droplet and caused by the capillary flow of a liquid constituting the droplet from a center to an edge of the droplet that pushes the liquid constituting the droplet towards the edge of the droplet.

Advantageously to avoid the previously presented drawback the layer 301 may be formed of elastomers like polyurethane, silicone, or Polydimethylsiloxane (PDMS). The layer 301 may be for example formed of Teflon.

The layer 301 may also be selected to not create optical power defect higher than what one may tolerate on the object. When the object is an ophthalmic lens, the tolerance is usually of +/- 0.06 diopters for an ophthalmic lens of a regular size. The tolerance of +/- 0.06 diopters is the usual ISO tolerance of semi-finished lenses for single vision or the far vision part of a progressive lens. The admitted amplitude of defect may depend on the wavelength of the defect. The wavelength is related to the distance between axes of the blocks 201.

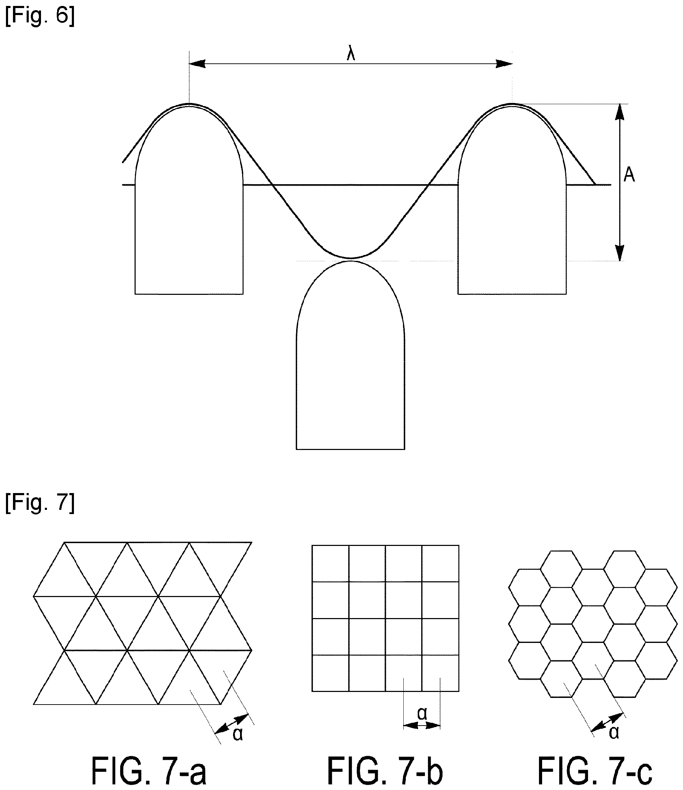

The amplitude depends on the ability of the layer 301 to cover continuously all the block 201 while respecting the shape so created. The local surface power P is calculated thanks to the refractive index *n* of the material and the local radius *r* of the surface. The r radius is obtained thanks to the value of the derivative of the function *C* of the surface of the layer 301. The figure 5 represents these elements used to the determination of the local surface power *P*. One may use the following formula to determine the local surface power *P*: $P = \left(n-1\right) \frac{1}{r}$ With $\frac{1}{r} = \frac{\left|Z"\right|}{{\left(1+{Z}^{′ 2}\right)}^{3 / 2}}$ With the hypothesis that a local waviness of the layer 301 can be describe as a sine function with total amplitude *A* and wavelength *λ* then one may obtain the following formula: $P = \left(n-1\right) \frac{A}{2 {λ}^{2}}$ The figure 6 represents the parameters related to the description as a sine function of a local waviness of the layer 301.

The applicant realized experiments and these experiments show that one obtains an optical smoothing effect lower than 0.06 diopters when the waviness of the layer 301 is lower than 0.1 µm with blocks 201 width of 2mm (wavelenth λ of 4mm).

When the object is an ophthalmic lens and a surface of the ophthalmic lens is not smooth enough, the skilled person knows how to smooth the surface for example by adding a covering coating as described in the patent application reference EP3842221 or by filtering polishing with a polishing tool as described in the patent application EP3060369.

In embodiments, each block may be a prism. By prism one means in this divulgation a solid geometric figure whose two ends, also called bases, are similar, equal, and parallel rectilinear figures, and whose sides are parallelograms. In embodiments, the two ends are perpendicular to the rectilinear figures forming the ends.

In embodiments the blocks may be a cylinder, in this case it is advantageous to place the layer 301 on top of the blocks to insure the impermeability of the surface of the build platform.

In embodiments, the base of the prism may have a shape selected from a group comprising of a triangular shape, a square shape, and a hexagonal shape. These geometries may provide a sealing function between the blocks 201 without sealing membrane, it if the blocks 201 are perfectly adjusted.

The figures 7-a to 7-c represent different shapes of the base of the prism forming the blocks. The figure 7-a represents a triangular shape, the figure 7-b represents a square shape, and the figure 7-c represents a hexagonal shape. "a" is the width of the blocks.

**In** embodiments, the points of the surface 101-a of the build platform 101 are configured to move in a direction substantially perpendicular to the surface 101-a.

### Description of the method for additively manufacturing the object

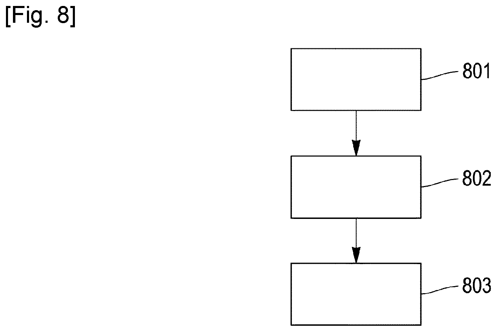

The figure 8 represents the steps of a method for additively manufacturing the object. This method may be realized by the system 100 of the figure 1.

The method comprises:
- A step 801 of creating a first layer of a solid material; the first layer being part of the object,
- A step 802 of adjusting a position of at least one point of a surface of a build platform independently of other points of the surface, the build platform being configured to support the object during the manufacturing of the object,
- A step 803 of creating a second layer of the solid material, the second layer being part of the object.

In other words, the figure 8 represents a method for additively manufacturing an object. The method comprises creating successive layers of the object and modifying a shape of an impermeable surface of a build platform 101 intended to support the object, so that a part of the surface of the build platform 101 is adapted to support a part of a layer of the object yet to be manufactured and which is not resting on a previously manufactured layer of the object. The modification of the shape of the surface is applied at the initialization of the method or between the creation of two successive layers. By "the surface of the build platform 101 is adapted to support the part of the layer of the object", one means that the shape of the surface matches with a shape of the part of the layer intended to be realized.

To realize the additive manufacturing of the object, the memory of the control module may store a computer program comprising instructions which, when the program is executed by the processor, cause the control module to command the additive manufacturing system 100 to realize the method of the figure 8.

The second layer may partially be laid on the first layer, and/or may partially be laid on the at least one point of the build platform that has been adjusted.

The step 801 of creating the first layer and the step 803 of creating the second layer are both realized by the manufacturing module 102.

The movement of the points of the surface 101-a of the build platform 101 may be defined using various strategies. For example, at the beginning, all the points may be at the same altitude. There is a relative translation of some points corresponding to a layer thickness of the object. The points that are translated are defined depending on the shape of the layer to manufacture.

In the case where one manufactures the convex side of the lens first, meaning that the convex side is facing the build platform 101 (opposite to the manufacturing module 102), the first layers may be composed of a circle like shape. At each step one may translate some of the points upward. For example, one may translate upward the point vertically aligned with a periphery of the lens. This translation may depend on whether the manufacturing module 102 is fixed in altitude and it's the build platform 101 which is moving or the build platform 101 is fixed and the manufacturing module 102 is moving.

When the liquid material is an UV curable material and the curing is realized thanks to a display configured to project an image on the liquid material, there will be a correlation between the pixels of the display that are turned on (where the material will be jetted then cured) and the points of the surface 101-a of the build platform 101 that will move, as the movement of the points will create a reservoir to receive the jetted then cured material.

In the case where one manufactures the concave side of the lens first, meaning the concave side is facing the build platform 101, the first layers will be composed of hollowed circles or rings and at each step, the points corresponding to the turned-on pixels of the display will be moved relatively.

The size of the actuators allowing the movements of the points can be of the same size as the pixels. Though, usually the pixel size in additive manufacturing is around 10 to 100 µm. Thus, it can be difficult to have an actuator of this size. If the distance between the actuators is bigger than the distance between the pixels, one possibility is to take that into account in the image generation by grouping pixels to match the size of the actuator.

In other words, the movement of a point of the surface 101-a may depend on the progress of the manufacturing.

A point may be translated at each layer until it is not covered by liquid material. After the curing of the liquid material the point remains at its position until the end of the manufacturing of the object.

At the beginning of the manufacturing, the plane of the surface 101-a of the build platform 101 is flat. A curvature will be created by moving some points relative to the manufacturing module 102.

If movements are considered relative to the manufacturing module 102. At each step, some points are moved up. Those points correspond to the points that have not been covered by liquid material and are outside the image projected to cure the liquid material. A gap can be applied to have a better continuity at the border. This gap can be set by adding an extra thickness in the image build to define the points to be moved. This gap should not create an extra height that could interfere with the movement of the manufacturing module 102.

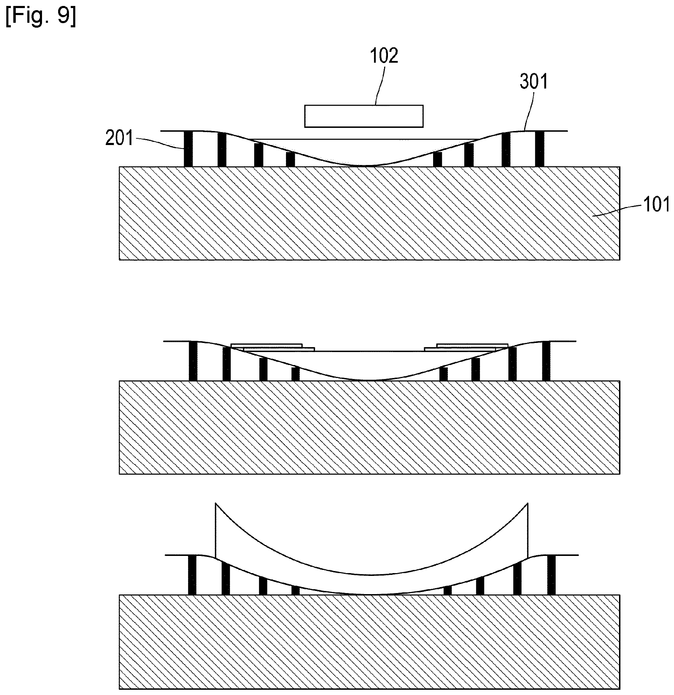

Figure 9 represents an example, not according to the claimed invention, of use of the of the method of figure 8, for additively manufacturing a lens using the additive manufacturing system 100. From top to bottom, the blocks 201 covered by the layer 301 are first placed to create the bottom part of the lens. Then the blocks 201 are moved to create a support during the creation of the different layers of the lens. Then in the bottom part when the new layers may be created without the need for further support the blocks 201 may be kept immobile.

## Claims

1. An additive manufacturing system (100) comprising:
• a build platform (101), a surface (101-a) of the build platform (101) being configured to support an object being manufactured,
• a manufacturing module (102) configured to create layers of the object,
wherein the surface (101-a) of the build platform (101) is impermeable, and the additive manufacturing system (100) is configured to move a point of a surface (101-a) of the build platform (101) independently of other points of the surface (101-a) during the manufacturing of the object,
wherein the build platform (101) is segmented into a plurality of blocks (201), a seal (202) is positioned at the junctions between the blocks (201), and at least one of the blocks is configured to move independently of the other blocks.

2. The additive manufacturing system (100) according to claim 1, each block (201) being a prism.

3. The additive manufacturing system (100) according to claim 2, wherein a base of the prism has a shape selected from a group comprising of a triangular shape, a square shape, and a hexagonal shape.

4. The additive manufacturing system (100) according to any one of claims 1 to 3 wherein the point of the surface (101-a) of the build platform (100) is configured to move in a direction substantially perpendicular to the surface (101-a).

5. The additive manufacturing system (100) according to any one of claims 1 to 4, wherein the object is manufactured layer by layer, and the additive manufacturing system (100) is configured to move the point of the surface (101-a) of the build platform (101) between the manufacturing of two successive layers.

6. The additive manufacturing system (100) according to claim 5, wherein the additive manufacturing system (100) is configured to move the point of the surface (101-a) of the build platform (101) such that a distance between the manufacturing module (102) and a surface where the layer is created remains constant.

7. The additive manufacturing system (100) according to claim 5 or 6,
the manufacturing module (102) being configured to dispense a liquid material and to solidify the liquid material to form the layers of the object.

8. The additive manufacturing system (100) according to claim 7, the liquid material being a UV-curable liquid material, the manufacturing module (102) comprising a jetting head configured to dispense the UV-curable liquid material, the manufacturing module (102) comprising a UV light configured to cure the UV-curable liquid material.

9. The additive manufacturing system (100) according to claim 5 or 6,
the build platform (101) being a bottom of a tank, the tank comprising a liquid material,
the manufacturing module (102) being configured to solidify parts of an upper layer of the liquid material, to form the layers of the object.

10. The additive manufacturing system (100) according to claim 9,
the liquid material being a curable material, for example a UV-curable material,
the manufacturing module (102) comprising a UV light configured to cure the UV-curable material.

11. The additive manufacturing system (100) according to any one of claims 1 to 10,
the object being a lens,
the additive manufacturing system (100) being configured to manufacture the lens.

12. Method for additively manufacturing an object,
the method comprising:
• creating (801) a first layer of a solid material; the first layer being part of the object,
• adjusting (802) a position of at least one point of a surface of a build platform (101) independently of other points of the surface, the build platform (101) being configured to support the object during the manufacturing of the object,
• creating (803) a second layer of the solid material, the second layer being part of the object,
the surface of the build platform (101) being impermeable,
the build platform (101) being segmented into a plurality of blocks (201), a seal (202) being positioned at the junctions between the blocks (201), and at least one of the blocks being configured to move independently of the other blocks.

13. The method of claim 12, further comprising:
• creating successive layers of the object
• modifying a shape of the impermeable surface of the build platform (101) intended to support the object, so that a part of the surface of the build platform (101) is adapted to support a part of a layer of the object yet to be manufactured and which is not resting on a previously manufactured layer of the object.

## Patentansprüche

1. Additives Fertigungssystem (100), das Folgendes umfasst:
• eine Aufbauplattform (101), wobei eine Oberfläche (101-a) der Aufbauplattform (101) dazu ausgelegt ist, ein zu fertigendes Objekt zu stützen,
• ein Fertigungsmodul (102), das dazu ausgelegt ist, Schichten des Objekts zu erzeugen, wobei die Oberfläche (101-a) der Aufbauplattform (101) undurchlässig ist und das additive Fertigungssystem (100) dazu ausgelegt ist, während der Fertigung des Objekts einen Punkt einer Oberfläche (101-a) der Aufbauplattform (101) unabhängig von anderen Punkten der Oberfläche (101-a) zu bewegen, wobei
die Aufbauplattform (101) in mehrere Blöcke (201) segmentiert ist, wobei eine Dichtung (202) an den Übergängen zwischen den Blöcken (201) positioniert ist und mindestens einer der Blöcke dazu ausgelegt ist, sich unabhängig von den anderen Blöcken zu bewegen.

2. Additives Fertigungssystem (100) nach Anspruch 1, wobei jeder Block (201) ein Prisma ist.

3. Additives Fertigungssystem (100) nach Anspruch 2, wobei eine Basis des Prismas eine Form aufweist, die aus einer Gruppe ausgewählt ist, die eine dreieckige Form, eine quadratische Form und eine hexagonale Form umfasst.

4. Additives Fertigungssystem (100) nach einem der Ansprüche 1 bis 3, wobei der Punkt der Oberfläche (101-a) der Aufbauplattform (100) dazu ausgelegt ist, sich in einer Richtung im Wesentlichen senkrecht zu der Oberfläche (101-a) zu bewegen.

5. Additives Fertigungssystem (100) nach einem der Ansprüche 1 bis 4, wobei das Objekt schichtweise gefertigt wird und das additive Fertigungssystem (100) dazu ausgelegt ist, den Punkt der Oberfläche (101-a) der Aufbauplattform (101) zwischen der Fertigung von zwei aufeinanderfolgenden Schichten zu bewegen.

6. Additives Fertigungssystem (100) nach Anspruch 5, wobei das additive Fertigungssystem (100) dazu ausgelegt ist, den Punkt der Oberfläche (101-a) der Aufbauplattform (101) derart zu bewegen, dass ein Abstand zwischen dem Fertigungsmodul (102) und einer Oberfläche, auf der die Schicht erzeugt wird, konstant bleibt.

7. Additives Fertigungssystem (100) nach Anspruch 5 oder 6,
wobei das Fertigungsmodul (102) dazu ausgelegt ist, ein flüssiges Material abzugeben und das flüssige Material zu verfestigen, um die Schichten des Objekts zu bilden.

8. Additives Fertigungssystem (100) nach Anspruch 7, wobei das flüssige Material ein UV-härtbares flüssiges Material ist, wobei das Fertigungsmodul (102) einen Strahlkopf umfasst, der dazu ausgelegt ist, das UV-härtbare flüssige Material abzugeben, wobei das Fertigungsmodul (102) ein UV-Licht umfasst, das dazu ausgelegt ist, das UV-härtbare flüssige Material zu härten.

9. Additives Fertigungssystem (100) nach Anspruch 5 oder 6,
wobei die Aufbauplattform (101) ein Boden eines Tanks ist, wobei der Tank ein flüssiges Material umfasst, wobei das Fertigungsmodul (102) dazu ausgelegt ist, Teile einer oberen Schicht des flüssigen Materials zu verfestigen, um die Schichten des Objekts zu bilden.

10. Additives Fertigungssystem (100) nach Anspruch 9, wobei das flüssige Material ein härtbares Material, zum Beispiel ein UV-härtbares Material, ist,
wobei das Fertigungsmodul (102) ein UV-Licht umfasst, das dazu ausgelegt ist, das UV-härtbare Material zu härten.

11. Additives Fertigungssystem (100) nach einem der Ansprüche 1 bis 10,
wobei das Objekt eine Linse ist,
wobei das additive Fertigungssystem (100) dazu ausgelegt ist, die Linse zu fertigen.

12. Verfahren zum additiven Fertigen eines Objekts, wobei das Verfahren Folgendes umfasst:
• Erzeugen (801) einer ersten Schicht aus einem festen Material; wobei die erste Schicht Teil des Objekts ist,
• Anpassen (802) einer Position von mindestens einem Punkt einer Oberfläche einer Aufbauplattform (101) unabhängig von anderen Punkten der Oberfläche, wobei die Aufbauplattform (101) dazu ausgelegt ist, das Objekt während der Fertigung des Objekts zu stützen,
• Erzeugen (803) einer zweiten Schicht des festen Materials, wobei die zweite Schicht Teil des Objekts ist, wobei die Oberfläche der Aufbauplattform (101) undurchlässig ist,
wobei die Aufbauplattform (101) in mehrere Blöcke (201) segmentiert ist, wobei eine Dichtung (202) an den Übergängen zwischen den Blöcken (201) positioniert ist und mindestens einer der Blöcke dazu ausgelegt ist, sich unabhängig von den anderen Blöcken zu bewegen.

13. Verfahren nach Anspruch 12, das ferner Folgendes umfasst:
• Erzeugen von aufeinanderfolgenden Schichten des Objekts
• Modifizieren einer Form der undurchlässigen Oberfläche der Aufbauplattform (101), die dazu bestimmt ist, das Objekt zu stützen, derart, dass ein Teil der Oberfläche der Aufbauplattform (101) dazu geeignet ist, einen Teil einer Schicht des Objekts zu stützen, die noch gefertigt werden muss und die nicht auf einer zuvor gefertigten Schicht des Objekts aufliegt.

## Revendications

1. Système de fabrication additive (100), comprenant :
• une plate-forme de construction (101), une surface (101-a) de la plate-forme de construction (101) étant configurée pour supporter un objet en train d'être fabriqué,
• un module de fabrication (102) configuré pour créer des couches de l'objet, dans lequel la surface (101-a) de la plate-forme de construction (101) est imperméable, et le système de fabrication additive (100) est configuré pour déplacer un point d'une surface (101-a) de la plate-forme de construction (101) indépendamment d'autres points de la surface (101-a) durant la fabrication de l'objet,
dans lequel
la plate-forme de construction (101) est segmentée en une pluralité de blocs (201), un joint d'étanchéité (202) est positionné aux jonctions entre les blocs (201), et au moins un des blocs est configuré pour se déplacer indépendamment des autres blocs.

2. Système de fabrication additive (100) selon la revendication 1, chaque bloc (201) étant un prisme.

3. Système de fabrication additive (100) selon la revendication 2, dans lequel une base du prisme a une forme sélectionnée parmi un groupe constitué d'une forme triangulaire, d'une forme carrée, et d'une forme hexagonale.

4. Système de fabrication additive (100) selon l'une quelconque des revendications 1 à 3, dans lequel le point de la surface (101-a) de la plate-forme de construction (100) est configuré pour se déplacer dans une direction sensiblement perpendiculaire à la surface (101-a).

5. Système de fabrication additive (100) selon l'une quelconque des revendications 1 à 4, dans lequel l'objet est fabriqué couche par couche, et le système de fabrication additive (100) est configuré pour déplacer le point de la surface (101-a) de la plate-forme de construction (101) entre la fabrication de deux couches successives.

6. Système de fabrication additive (100) selon la revendication 5, dans lequel le système de fabrication additive (100) est configuré pour déplacer le point de la surface (101-a) de la plate-forme de construction (101) de manière telle qu'une distance entre le module de fabrication (102) et une surface où la couche est créée reste constante.

7. Système de fabrication additive (100) selon la revendication 5 ou 6,
le module de fabrication (102) étant configuré pour distribuer un matériau liquide et pour solidifier le matériau liquide pour former les couches de l'objet.

8. Système de fabrication additive (100) selon la revendication 7, le matériau liquide étant un matériau liquide durcissable par UV, le module de fabrication (102) comprenant une tête d'éjection configurée pour distribuer le matériau liquide durcissable par UV, le module de fabrication (102) comprenant une lumière UV configurée pour durcir le matériau liquide durcissable par UV.

9. Système de fabrication additive (100) selon la revendication 5 ou 6,
la plate-forme de construction (101) étant un fond d'un réservoir, le réservoir comprenant un matériau liquide, le module de fabrication (102) étant configuré pour solidifier des partie d'une couche supérieure du matériau liquide, pour former les couches de l'objet.

10. Système de fabrication additive (100) selon la revendication 9,
le matériau liquide étant un matériau durcissable, par exemple un matériau durcissable par UV,
le module de fabrication (102) comprenant une lumière UV configurée pour durcir le matériau durcissable par UV.

11. Système de fabrication additive (100) selon l'une quelconque des revendications 1 à 10,
l'objet étant une lentille,
le système de fabrication additive (100) étant configuré pour fabriquer la lentille.

12. Procédé de fabrication additive d'un objet,
le procédé comprenant :
• la création (801) d'une première couche d'un matériau solide ; la première couche faisant partie de l'objet,
• le réglage (802) d'une position d'au moins un point d'une surface d'une plate-forme de construction (101) indépendamment d'autres points de la surface, la plate-forme de construction (101) étant configurée pour supporter l'objet durant la fabrication de l'objet,
• la création (803) d'une seconde couche du matériau solide, la seconde couche faisant partie de l'objet,
la surface de la plate-forme de construction (101) étant imperméable,
la plate-forme de construction (101) étant segmentée en une pluralité de blocs (201), un joint d'étanchéité (202) étant positionné aux jonctions entre les blocs (201), et au moins un des blocs étant configuré pour se déplacer indépendamment des autres blocs.

13. Procédé de la revendication 12, comprenant en outre :
• la création de couches successives de l'objet
• la modification d'une forme de la surface imperméable de la plate-forme de construction (101) prévue pour supporter l'objet, de telle sorte qu'une partie la surface de la plate-forme de construction (101) est adaptée pour supporter une partie d'une couche de l'objet restant à fabriquer et qui ne repose pas sur une couche fabriquée auparavant de l'objet.
